(19) Europäisches Patentamt
European Patent Office
Office européen des brevets

(11) EP 3 246 349 A1

(12) EUROPEAN PATENT APPLICATION

(43) Date of publication:
22.11.2017 Bulletin 2017/47

(21) Application number: 17172839.7

(22) Date of filing: 24.05.2017

(51) Int Cl.:
*C08G 63/91* (2006.01)
*C08G 69/48* (2006.01)
*C08K 5/357* (2006.01)
*C08K 5/1539* (2006.01)
*C08K 5/353* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nexam Chemical AB**
**223 63 Lund (SE)**

(72) Inventors:
- **Momcilovic, Dane**
  **226 51 Lund (SE)**
- **Knutsson, Malin**
  **271 57 Ystad (SE)**
- **Solano, Carlos**
  **224 72 Lund (SE)**
- **Lager, Erik**
  **226 51 Lund (SE)**
- **Gordon Pepper, Adrian**
  **Scotland, Fife KY15 5RU (GB)**
- **Roff Geoffrey, John**
  **Scotland, Fife KY15 4GY (GB)**

(74) Representative: **Ström & Gulliksson AB**
**P.O. Box 4188**
**203 13 Malmö (SE)**

# (54) PROCESS FOR INCREASING THE MELT STRENGTH OF A THERMOPLASTIC POLYMER

(57) A process for increasing the melt strength of a thermoplastic polymer, the thermoplastic polymer being a polyester, a polyamide, or a polyurethane. The process comprises the steps of:
- adding 5-(3-phenylprop-2-ynoyl)isobenzofuran-1,3-dione (**P**henyl**E**thynyl**T**rimellitic**A**nhydride; PETA) and a bisoxazoline, or a bis-5,6-dihydro-4H-1,3-oxazine, to the thermoplastic polymer; and
- mixing and heating the mixture to melt the thermoplastic polymer and have the thermoplastic polymer, PETA, and the bisoxazoline reacting, thereby increasing the melt strength of the thermoplastic polymer.

Fig. 2

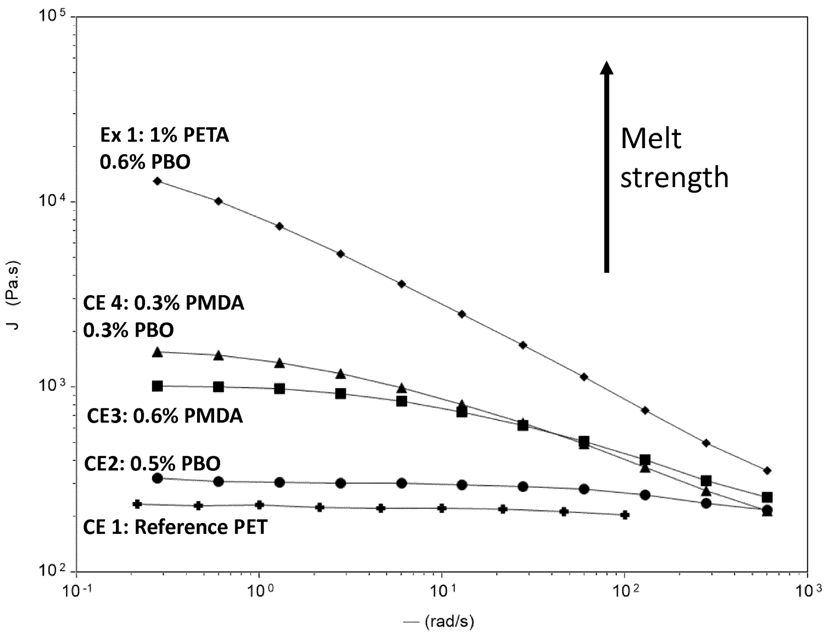


EP 3 246 349 A1

**Description**

## FIELD OF THE INVENTION

The present invention relates to a process for increasing the melt strength of a thermoplastic polyester and to a polymer compound comprising a thermoplastic polyester and having high melt strength.

## BACKGROUND

Polymer compounds comprising a thermoplastic polyester, e.g. polyethylene terephthalate (PET), or a thermoplastic aliphatic polyamide, e.g. PA6, typically have good mechanical characteristics, heat resistance, chemical resistance and dimensional stability. Thermoplastic polyesters are widely used in the fields of extrusion, injection molding and stretch blow molding to produce products such as fibers, containers and film. Further, polyethylene terephthalate (PET), being a common thermoplastic polyester, is used in foam extrusion to provide foamed PET which can be used as a lightweight construction material, e.g. in composite sandwich constructions.

However, especially thermoplastic polyesters, but also to some extent aliphatic polyamides, suffer from having a narrow processing window, thereby typically requiring specialized processing equipment. This is related to the melt rheology of thermoplastic polyesters. Thermoplastic polyesters typically have low melt viscosity, low melt strength, and low melt elasticity. This is a consequence of the attainable molecular weight, being limited by the melt viscosity of polyesters and polyamides commercially produced in melt processes.

Accordingly, various means for improving the melt rheology of thermoplastic polyesters, e.g. polyethylene terephthalate (PET), and thermoplastic aliphatic polyamides have been provided in the art.

For thermoplastic polyesters, pyromellitic dianhydride (PMDA) has commonly been used as chain extender, to improve the melt rheology (cf. e.g. WO 98/33837). In WO 98/33837 the combined use of PMDA and polyhydric alcohols is described. Further, also the addition of 1,3-phenylene-bis-oxazoline (PBO) to support PMDA in improving the melt rheology of thermoplastic polyesters has been disclosed in art (cf. EP 0 639 612). PBO is added to limit the inherent thermomechanical degradation of the polyester. While PMDA act as chain extender in reacting with hydroxylic polymer end groups, the ring opening of the anhydride moieties also increase the number of free carboxylic acid groups. The carboxylic acid groups catalyzes the thermomechanical degradation. As can be seen in Fig. 1, the increased melt viscosity provided by addition of PMDA/PBO to PET will be pass through a maximum and decrease again. This is the result of the inherent thermomechanical degradation of the polyester, catalyzed by free carboxylic acid groups. Addition of PBO will slow down the thermomechanical degradation, but the polyester will still be degraded.

For extrusion processes, e.g. extrusion of PET foam, the melt strength is a critical parameter. Further, the residence time in the extruder is typically quite long in extrusion of PET foam. Thus, further attempts have been made in the art to affect the inherent thermomechanical degradation of the polyester resulting from the use of PMDA. According to EP 2 163 577, addition of sterically hindered phenols, believed to act as radical scavengers, will decrease the thermomechanical degradation further, thereby improving the melt strength.

Further, also polyfunctional compounds comprising non-sterically hindered phenolic hydroxyl groups may be used to supplement additives comprising PMDA and PBO for use in improving the melt strength of polyesters (cf. WO 2012/120148).

However, although these systems provide some effect and may be used to improve the melt strength, they still suffer from limited thermomechanical stability, as the polyester still will be degraded during melt mixing.

It would thus be desired to provide means for providing polyesters with increased melt strength also for extended residence times, being desired in e.g. extrusion of PET foam.

## SUMMARY

Consequently, the present invention seeks to mitigate, alleviate, eliminate or circumvent one or more of the above-identified deficiencies in the art and disadvantages singly or in any combination by providing, according to a first aspect of the invention, a process for increasing the melt strength of a thermoplastic polymer.

The thermoplastic polymer is a polyester, a polyamide, or a polyurethane. In the process, at least the following steps are comprised:

- adding 5-(3-phenylprop-2-ynoyl)isobenzofuran-1,3-dione (**P**henyl**E**thynyl**T**rimellitic**A**nhydride; PETA) and a bisoxazoline, or a bis-5,6-dihydro-4H-1,3-oxazine, to the thermoplastic polymer; and
- mixing and heating the mixture to melt, i.e. melt-mixing, the thermoplastic polymer and have the thermoplastic polymer, PETA, and the bisoxazoline, or the bis-5,6-dihydro-4H-1,3-oxazine, reacting, thereby increasing the melt strength of the thermoplastic polymer. Typically, the mixture is heated to at a temperature exceeding the melting

point of the thermoplastic polymer.

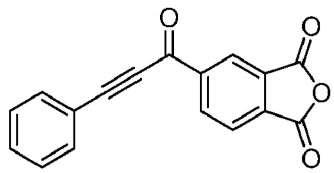

*PETA - PhenylEthynylTrimelliticAnhydride (5-(3phenylprop-2-ynoyl)isobenzofuran-1,3-dione)*

By using PETA, rather than pyromellitic dianhydride (PMDA) commonly used in the art, the melt strength of thermoplastic polyesters could be considerably increased. By use of the same combination, i.e. PETA and a bisoxazoline, also the melt strength of polyamides, e.g. aliphatic polyamides, and thermoplastic polyurethanes, could be improved.

Further and importantly, the rate of the thermomechanical degradation seen in melt mixing of thermoplastic polyesters was considerably decreased compared to PBO/PMDA-systems, as can be seen from Fig. 1. For applications with longer residence times, such as residence times exceeding 10 minutes, this is a clear advantage, as the thermomechanical degradation is quite rapid for PBO/PMDA-systems. A typical example of an application with longer residence time is extrusion foaming of PET.

Though a high maximum melt strength may be obtained by use of PBO/PMDA-systems, such systems still suffer from only providing a moderate ultimate increase in melt strength after longer processing times. This may partly be compensated by adding more PBO/PMDA. However, the processing equipment sets an upper limit for the tolerated maximum melt strength and thereby inherently also for the ultimate melt strength.

As recognized by the skilled person melt strength can be described as the molten polymers resistance to stretching. The melt strength is related to polymer chain entanglements and their resistance to untangling under strain. Resistance to untangling is affected by molecular weight (i.e. chain-length) and molecular branching. An increase in either property will increase the melt strength. Thermomechanical degradation will reduce the chain-length as well as the branching of the polymer chains. The pressure in an extruder is directly proportional to the viscosity of the polymer melt. Since it is well known that chemical reactions such as chain-extension, long-chain branching and cross-linking increase the melt viscosity, all affecting the melt strength, the pressure in the extruder may serve as an indirect measurement of the melt strength. The relevance of this indirect measurement can be confirmed by studying also the melt rheology for some exemplary compounds.

Various bisoxazolines are useful in the present process. According to an embodiment, the bisoxazoline is a compound according to formula I,

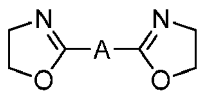 (I)

wherein "A" is a bond, *meta*-phenylene, or *para*-phenylene. "A" may also be pyridine-2,6-diyl, but that is less preferred. As an example, the bisoxazoline may be selected from the group consisting 1,3-bis(4,5-dihydrooxazol-2-yl)benzene (1,3-PBO), 1,4-bis(4,5-dihydrooxazol-2-yl)benzene (1,4-PBO), and 2,2'-bis-(2-oxazoline). 2,2'-(1,3-phenylene)bis(4,5-dihydrooxazole), also known as 1,3-phenylene-bis-oxazoline (1,3-PBO), or 1,3-bis(4,5-dihydrooxazol-2-yl)benzene, represents a preferred bisoxazoline.

Further, the bisoxazoline may be replaced with a corresponding bis-5,6-dihydro-4H-1,3-oxazine, i.e. a compound comprising at least two [5,6-dihydro-4H-1,3-oxazine] residues, e.g. 1,3-bis(5,6-dihydro-4*H*-1,3-oxazin-2-yl)benzene, 1,4-bis(5,6-dihydro-4*H*-1,3-oxazin-2-yl)benzene, or 5,5',6,6'-tetrahydro-4H,4'H-2,2'-bi(1,3-oxazine). As recognized by the skilled person, bis-5,6-dihydro-4*H*-1,3-oxazines have in principle the same reactivity as the corresponding bisoxazolines. Various bis-5,6-dihydro-4*H*-1,3-oxazins are thus also useful in the present process. According to an embodiment, the bis-5,6-dihydro-4H-1,3-oxazine is a compound according to formula II,

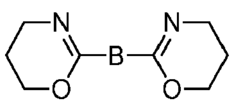 (II)

wherein "B" is a bond, *meta*-phenylene, or *para*-phenylene. "B" may also be pyridine-2,6-diyl, but that is less preferred.

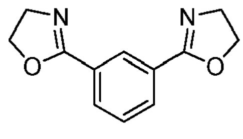

1,3-bis(4,5-dihydrooxazol-2-yl)benzene
"1,3-PBO"

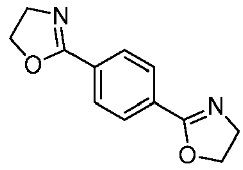

1,4-bis(4,5-dihydrooxazol-2-yl)benzene
"1,4-PBO"

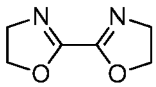

4,4',5,5'-tetrahydro-2,2'-bioxazole
"2,2'-bis-(2-oxazoline)"

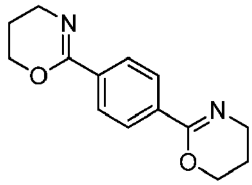

1,4-bis(5,6-dihydro-4*H*-1,3-oxazin-2-yl)benzene

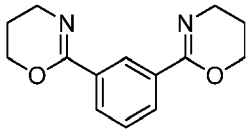

1,3-bis(5,6-dihydro-4*H*-1,3-oxazin-2-yl)benzene

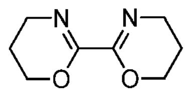

5,5',6,6'-tetrahydro-4*H*,4'*H*-2,2'-bi(1,3-oxazine)

As already described, the combined use of PETA and bisoxazoline was developed for melt mixing of thermoplastics polyesters in the first place. According to an embodiment, the thermoplastic polymer is thus a polyester. The polyester is typically an aliphatic polyester or a semi aromatic polyester. The polyester may be selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), and polyethylene naphthale (PEN). Specifically, the polyester employed may be a semi aromatic polyester. Examples of aliphatic polyesters include polylactic acid (PLA), polyglycolic acid (PGA), polycaprolactone (PCL), polyethylene adipate (PEA), and polyhydroxyalkanoate (PHA), e.g. poly-3-hydroxyvalerate (PHV), poly-4-hydroxybutyrate (P4HB), and poly-3-hydroxy propionate (P3HP). Examples of semi aromatic polyesters include polyethylene terephthalate (PET), polyethylene naphthalate (PEN), polypropylene terephthalate (PPT), polybutylene terephthalate (PBT), and polytrimethylene terephthalate (PTT). Further, the semi aromatic polyester may be a co-polymer of PET, PBT, or PEN.

According to a specific embodiment, the thermoplastic polymer is polyethylene terephthalate (PET). The PET may be a PET having an intrinsic viscosity (IV) of 0.4 to 2.0 dl/g. The IV may be determined in accordance with ASTM D2857-95 or ASTM D5225-09. Further, also other standardized test methods may be used to determine the IV. Preferably, the PET has an IV of 0.4 to 1.0 dl/g due to the fact that an IV of up to 2.0 represents a very high molecular weight.

Further, the combined use of PETA and a bisoxazoline, or a bis-5,6-dihydro-4*H*-1,3-oxazine, may not only be used to improve the melt strength of thermoplastic polyesters, but also to improve the melt strength of other polymers having end-groups with similar reactivity as hydroxyl and carboxyl groups.

According to an alternative embodiment, the thermoplastic polymer may thus be a polyamide, e.g. an aliphatic polyamide. Polyamides, e.g. aliphatic polyamides, have amino and carboxyl end-groups. The aliphatic polyamide may be an aliphatic polyamide selected from the group consisting of PA6, PA11, PA12, PA46, PA410, PA66, PA610, PA612, PA1010, PA1012, and PA1212. Especially, the aliphatic polyamide may be selected from the group consisting of PA6, PA12, and PA66.

Further, the thermoplastic polymer may be a thermoplastic polyurethane. Similar to polyesters, thermoplastic polyurethanes have hydroxyl end-groups.

The amount of PETA added to the thermoplastic polymer is typically between 0.5 to 2 wt.%. Further, the amount of bisoxazoline, or a bis-5,6-dihydro-4H-1,3-oxazine, added to the thermoplastic polymer is typically between 0.1 and 1 wt.%. The wt.% relates to the amount of the thermoplastic polymer. Addition of 1 g PETA and 0.5 g PBO to 98.5 g PET, would thus correspond to an addition of 1 wt.% PETA and 0.5 wt.% PBO, respectively.

PETA is to react with hydroxyl end-groups of the polyester or amino end-groups of the polyamide. Preferably, PETA is not added in stoichiometric excess in relation to the number of available hydroxyl end-groups or amino end-groups. According to an embodiment, the molar amount of PETA added is from 0.2 to 0.8, such as about 0.5, times the molar amount of hydroxyl end-groups or amino end-groups in the thermoplastic polymer.

According to an embodiment, for a polyester comprising X mmol/kg of hydroxyl end-groups, the molar amount of PETA added is ≤ X mmol/kg of the polyester. Preferably, the molar amount added is 0.2××X to 0.8××X mmol/kg, such as about 0.5××X mmol/kg, of the polyester. Similarly, according to an embodiment, for a polyamide comprising X mmol/kg of amino end-groups, the molar amount of PETA added is ≤ X mmol/kg of the polyamide. Preferably, the molar amount added is 0.2××X to 0.8××X mmol/kg, such as about 0.5××X mmol/kg, of the polyamide.

The amount of bisoxazoline, or a bis-5,6-dihydro-4H-1,3-oxazine, to be added to a polyester is preferably based on the number of carboxy end-groups of the polyester and the amount of PETA added (ring opening of the anhydride in reacting with a hydroxyl will result in a carboxy group). Adding a bisoxazoline, or a bis-5,6-dihydro-4H-1,3-oxazine, in approximatively stoichiometric amount is preferred, i.e. 0.5 mole for every mole of carboxy groups (the bisoxazoline and the bis-5,6-dihydro-4*H*-1,3-oxazin are bi-functional). According to an embodiment, the molar amount of bisoxazoline, or bis-5,6-dihydro-4H-1,3-oxazine, to be added to a polyester may thus be calculated according to formula III:

$$A\times(B/2+C/2)\ (III),$$

wherein:

"A" is from 0.7 to 1.3, preferably 0.8 to 1.2, e.g. about 1;
"B" is the molar amount of carboxy end-groups in the polyester; and
"C" is the molar amount of PETA added.

The amount of bisoxazoline, or bis-5,6-dihydro-4H-1,3-oxazine, to be added to a polyamide is preferably based on the number of carboxy end-groups of the polyamide, but not the amount of PETA added (ring opening of the anhydride in reacting with an amino group will eventually result in formation of an imide). Adding the bisoxazoline, or the bis-5,6-dihydro-4H-1,3-oxazine, in approximatively stoichiometric amount is preferred, i.e. 0.5 mole for every mole of carboxy groups (the bisoxazoline is difunctional). According to an embodiment, the molar amount of bisoxazoline, or bis-5,6-dihydro-4H-1,3-oxazine, added is thus 0.3 to 0.7, such 0.4 to 0.6, e.g. about 0.5, times the molar amount of carboxy groups in the polyamide.

According to an embodiment, further additives directly or indirectly affecting the melt strength are added to the thermoplastic polymer. Examples of such additives include polyols and tetracarboxylic di-anhydrides. According to an embodiment, a dianhydride is added to the thermoplastic polymer. Examples of tetracarboxylic di-anhydrides that may be added include pyromellitic dianhydride, 4,4'-oxydiphthalic anhydride, 2,2-bis-[4-(3,4-dicarboxyphenoxy)phenyl]-propane dianhydride, 3,3',4,4'-benzophenonetetracarboxylic acid dianhydride, 3,3',4,4'-tetracarboxybiphenyl dianhydride, 4,4',5,5'-sulfonyldiphthalic anhydride, 5,5'-(perfluoropropane-2,2-diyl)bis(isobenzofuran-1,3-dione), and tetrahydrobenzo[1,2-c:4,5-c']difuran-1,3,5,7(3aH,7aH)-tetraone. Pyromellitic dianhydride represents a preferred tetracarboxylic di-anhydride to be added to the thermoplastic polymer and be melt-mixed therewith. According to an embodiment, a polyhydric aliphatic alcohol comprising at least three hydroxyl groups, such as pentaerythritol having four hydroxyl groups, is added to the thermoplastic polymer.

Further, poly functional compounds comprising at least two, and typically more than two, non-sterically hindered phenolic hydroxyl groups may be added to the thermoplastic polymer. In WO 2012/120148 a number of such poly functional compounds have been disclosed. As used herein, the term non-sterically hindered phenolic hydroxyl group refers to a phenolic hydroxyl group not being 2,6-disubstituted, the hydroxyl group being in position 1 of the benzene ring, with *tert*-butyl groups. Preferably, non-sterically hindered phenolic hydroxyl group, as used herein, refers to a phenolic hydroxyl group not being 2,6-disubstituted, the hydroxyl group being in position 1 of the benzene ring, with bulky alkyl groups, such as a *tert*-butyl group, an iso-propyl group, a *sec*-butyl group, or a neopentyl group. Preferably, the *orto*-positions, i.e. position 2 and 6, the hydroxyl group being in position 1 of the aromatic ring, next to the non-sterically hindered phenolic hydroxyl group are unsubstituted.

As recognized by the skilled person, the thermoplastic polymer, PETA, and the bisoxazoline, or the bis-5,6-dihydro-4H-1,3-oxazine, may be mixed and heated, i.e. melt mixed, in various ways. According to an embodiment, the thermoplastic polymer, PETA, and the bisoxazoline, or the bis-5,6-dihydro-4H-1,3-oxazine, are mixed and heated in an extruder. The extruder may be a single screw extruder or a twin screw extruder. All components, typically in solid state, may be added at the same time to the extruder (co-feeding). However, as the thermoplastic polymer is the major component, it may be preferred, according to an embodiment, to firstly add the thermoplastic polymer, melt it, and subsequently add PETA and the bisoxazoline, or the bis-5,6-dihydro-4H-1,3-oxazine, to the molten thermoplastic polymer. PETA and the bisoxazoline, or the bis-5,6-dihydro-4H-1,3-oxazine, may, according to such an embodiment, be added downstream to the feeding of the thermoplastic polymer. PETA and the bisoxazoline, or the bis-5,6-dihydro-4H-1,3-oxazine, may be added via the hopper or via a side feeder of the extruder.

According to an embodiment, the residence time of the thermoplastic polymer in the extruder is between 10 and 30 minutes, such as between 15 and 25 minutes. Typically, extrusion foaming of PET requires extended residence times, as the melt needs to be cooled before being extruded and foamed.

In mixing and heating the thermoplastic polymer, PETA, and the bisoxazoline, or the bis-5,6-dihydro-4H-1,3-oxazine, the temperature should exceed the melting point of the thermoplastic polymer, i.e. the components should be melt mixed. However, in order to limit the inherent thermomechanical degradation, the temperature should not be too high. The temperature is thus typically lower than 350°C. According to an embodiment, the temperature during the melt mixing is from 250°C to 320°C, such as from 250°C to 300°C. For PET, the temperature during the melt mixing does preferably not exceed 300°C, whereas the temperature during the melt mixing does preferably not exceed 320°C for polyamides.

According to an embodiment, the process further comprises the step of foaming the obtained thermoplastic polymer having improved melt strength. According to such an embodiment, the process may further comprise adding a blowing agent, such as carbon dioxide, nitrogen, an alcohol, a ketone, methyl formate, a hydrofluorocarbon, a hydrocarbon, e.g. n-hexane, iso- or n-pentane, cyclopentane or n-heptane, or a gas mixture thereof, an expanding agent, and/or a foaming agent to the thermoplastic polymer. Further, other additives may be added to the thermoplastic polymer. Thus, also a nucleating agent, such as talc, kaolin, silica gel, or $TiO_2$, a flame retardant, such as a halogenated, charforming (like phosphorus-containing) or water-releasing compound, a plasticizer, a lubricant, such as an ester of a fatty acid, an impact modifier, insulation modifier, a pigment, a filler, an antioxidant, a UV-stabilizer and/or a color improver may be added to the thermoplastic polymer and melt mixed therewith.

As already described, the thermoplastic polymer with improved melt strength may be foamed. According to an alternative embodiment, the obtained thermoplastic polymer with improved melt strength is molded, such as injection molded, blow molded, or injection molded followed by stretch-blow molding, in an additional step. Further, the thermoplastic polymer with improved melt strength may be film blown or profile extruded, to provide thermoplastic film or thermoplastic profiles, e.g. pipes.

Articles, such as parts with complex molding geometries, e.g. mechanical parts, including gears, bottles, e.g. PET-bottles, films, profiles, e.g. pipes, and foams, produced by use of the thermoplastic polymer with improved melt strength will typically display improved mechanical properties, such as decreased plastic deformation, increased chemical resistance, increased barrier properties, and/or increased tracking resistance and surface resistivity. In US 5,597,525, various aspects of injection molding of polyethylene terephthalate is disclosed.

According to a further aspect of the invention there is thus provided an article obtained by extrusion, injection molding, blow molding, foaming, and/or stretch-blow molding. Examples of articles that may be produced by such a method includes parts with complex molding geometries, e.g. mechanical parts, including gears, bottles, PET-bottles, films, pipes, and foams. A specific embodiment relates to a PET-foam.

According to a further aspect of the invention there is provided a polymer compound comprising a thermoplastic polymer, being a polyester, a polyamide, or a polyurethane, a 5-(3-phenylprop-2-ynoyl)isobenzofuran-1,3-dione (**P**henyl**E**thynyl**T**rimellitic**A**nhydride; PETA), and a bisoxazoline, or a bis-5,6-dihydro-4H-1,3-oxazine. Aspects in relation to such a compound, obtained by melt mixing, has already been described herein above. These aspects are equally applicable to the compound.

According to an embodiment, the bisoxazoline is a compound according to formula I,

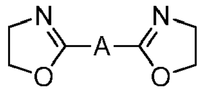
(I)

wherein "A" is a bond, *meta*-phenylene, or *para*-phenylene. "A" may also be pyridine-2,6-diyl, but that is less preferred. As an example, the bisoxazoline may be selected from the group consisting 1,3-bis(4,5-dihydrooxazol-2-yl)benzene (1,3-PBO), 1,4-bis(4,5-dihydrooxazol-2-yl)benzene (1,4-PBO), and 2,2'-bis-(2-oxazoline). 2,2'-(1,3-phenylene)bis(4,5-dihydrooxazole), also known as 1,3-phenylene-bis-oxazoline (1,3-PBO), or 1,3-bis(4,5-dihydrooxazol-2-yl)benzene, represents a preferred bisoxazoline.

Further, the bisoxazoline may be replaced with a corresponding bis-5,6-dihydro-4H-1,3-oxazine, i.e. a compound comprising at least two [5,6-dihydro-4H-1,3-oxazine] residues, e.g. 1,3-bis(5,6-dihydro-4*H*-1,3-oxazin-2-yl)benzene, 1,4-bis(5,6-dihydro-4*H*-1,3-oxazin-2-yl)benzene, or 5,5',6,6'-tetrahydro-4H,4'H-2,2'-bi(1,3-oxazine). As recognized by the skilled person, bis-5,6-dihydro-4*H*-1,3-oxazines have in principle the same reactivity as the corresponding bisoxazolines. Various bis-5,6-dihydro-4*H*-1,3-oxazins are thus also useful in the present process. According to an embodiment, the bis-5,6-dihydro-4H-1,3-oxazine is a compound according to formula II,

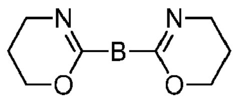
(II)

wherein "B" is a bond, *meta*-phenylene, or *para*-phenylene. "B" may also be pyridine-2,6-diyl, but that is less preferred.

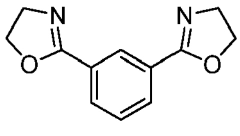
1,3-bis(4,5-dihydrooxazol-2-yl)benzene
"1,3-PBO"

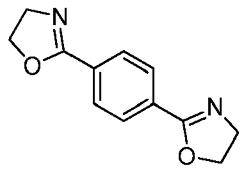
1,4-bis(4,5-dihydrooxazol-2-yl)benzene
"1,4-PBO"

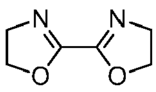
4,4',5,5'-tetrahydro-2,2'-bioxazole
"2,2'-bis-(2-oxazoline)"

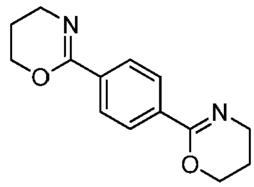
1,4-bis(5,6-dihydro-4*H*-1,3-oxazin-2-yl)benzene

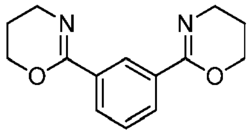
1,3-bis(5,6-dihydro-4*H*-1,3-oxazin-2-yl)benzene

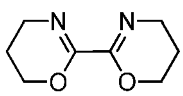
5,5',6,6'-tetrahydro-4*H*,4'*H*-2,2'-bi(1,3-oxazine)

As already described, the combined use of PETA and bisoxazoline was developed for melt mixing of thermoplastics polyesters in the first place. According to an embodiment, the thermoplastic polymer is thus a polyester. The polyester is typically an aliphatic polyester or a semi aromatic polyester. The polyester may be selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), and polyethylene naphthale (PEN). Specifically, the polyester employed may be a semi aromatic polyester. Examples of aliphatic polyesters include polylactic acid (PLA), polyglycolic acid (PGA), polycaprolactone (PCL), polyethylene adipate (PEA), and polyhydroxyalkanoate (PHA), e.g. poly-3-hydroxyvalerate (PHV), poly-4-hydroxybutyrate (P4HB), and poly-3-hydroxy propionate (P3HP). Examples of semi aromatic polyesters include polyethylene terephthalate (PET), polyethylene naphthalate (PEN), polypropylene terephthalate (PPT), polybutylene terephthalate (PBT), and polytrimethylene terephthalate (PTT). Further, the semi aromatic polyester may be a co-polymer of PET, PBT, or PEN.

According to a specific embodiment, the thermoplastic polymer is polyethylene terephthalate (PET). The PET may be a PET having an intrinsic viscosity (IV) of 0.4 to 2.0 dl/g. The IV may be determined in accordance with ASTM D2857-95 or ASTM D5225-09. Further, also other standardized test methods may be used to determine the IV. Preferably, the PET has an IV of 0.4 to 1.0 dl/g due to the fact that an IV of up to 2.0 represents a very high molecular weight.

Further, the combined use of PETA and a bisoxazoline, or a bis-5,6-dihydro-4*H*-1,3-oxazine, may, as already described, not only be used to improve the melt strength of thermoplastic polyesters, but also to improve the melt strength of other polymers having end-groups with similar reactivity as hydroxyl and carboxyl groups.

According to an alternative embodiment, the thermoplastic polymer may thus be a polyamide, e.g. an aliphatic polyamide. Polyamides, e.g. aliphatic polyamides, have amino and carboxyl end-groups. The aliphatic polyamide may be an aliphatic polyamide selected from the group consisting of PA6, PA11, PA12, PA46, PA410, PA66, PA610, PA612, PA1010, PA1012, and PA1212. Especially, the aliphatic polyamide may be selected from the group consisting of PA6, PA12, and PA66.

Further, the thermoplastic polymer may be a thermoplastic polyurethane. Similar to polyesters, thermoplastic polyurethanes have hydroxyl end-groups.

The amount of PETA added to the thermoplastic polymer is typically between 0.5 to 2 wt.%. Further, the amount

of bisoxazoline, or a bis-5,6-dihydro-4H-1,3-oxazine, added to the thermoplastic polymer is typically between 0.1 and 1 wt.%. The wt.% relates to the amount of the thermoplastic polymer. Addition of 1 g PETA and 0.5 g PBO to 98.5 g PET, would thus correspond to an addition of 1 wt.% PETA and 0.5 wt.% PBO, respectively.

Without further elaboration, it is believed that one skilled in the art may, using the preceding description, utilize the present invention to its fullest extent. The preceding preferred specific embodiments are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims or different embodiments, these may possibly advantageously be combined, and the inclusion in different claims or embodiment does not imply that a combination of features is not feasible and/or advantageous.

In addition, singular references do not exclude a plurality. The terms "a", "an", "first", "second" etc. do not preclude a plurality.

## BRIEF DESCRIPTION OF THE DRAWINGS

These and other aspects, features and advantages of which the invention is capable of will be apparent and elucidated from the following description of the exemplary embodiments of the present invention, reference being made to the accompanying drawings, in which:

**Figure 1** shows the measured pressure as function of processing time of PET-compounds (cf. Table 1) in the micro extruder;
**Figure 2** displays the complex viscosity as function of frequency as measured by parallel plate rheometry for the final compounds in Table 1; and
**Figure 3** shows the measured pressure as function of processing time of PA12-compounds (cf. Table 2) in the micro extruder.

## DETAILED DESCRIPTION AND EXPERIMENTAL

The following examples are mere examples and should by no means be interpreted to limit the scope of the invention. Rather, the invention is limited only by the accompanying claims.

### Material

PETA was synthesized according to WO 2011/128431. Methylethynylphthalic anhydride (MEPA) was synthesized according to WO 2012/052550. 1,3-PBO (1,3-bis(4,5-dihydrooxazol-2-yl)benzene) was obtained from Evonik Industries AG (Essen, Germany). PyBOx was synthesized according to Néry et al. (Macromol. Chem. Phys. 2003, 204, 1755). PMDA was obtained from Lonza Group Ltd (Basel, Switzerland). Phthalic anhydride (PA) was obtained from SigmaAldrich Sweden AB (Stockholm, Sweden). Polyethylene terephthalate, PET, (Melpet GS 820) was obtained from Meltem Kimya (Adana, Turkey). Polyamide 12 (Grilamid L20G) and polyamide 6 (Grilon BS Natural) were obtained from EMS-Chemie AG (Domat/Ems, Switzerland).

### Experimental procedure

*Compounding on micro extruder*

Compounding was performed using a micro extruder Haake MiniLab II (Thermo Scientific) equipped with co-rotating, conical twin-screws. The compounding procedure was run batch-wise using 5 g of polymer. The modifying agents PMDA, PyBOx, PETA and PBO were dosed according to Table 1 to 3 below, on basis of polymer mass. The modifying agents were dry blended with the polymer and fed manually to the micro extruder. Processing was performed with a screw revelation speed of 60 rpm at 270°C for PET, at 260°C for PA6, and at 250°C for PA12. During processing, the pressure was recorded to monitor the reaction of the modifying agent.

The reaction rate of the additives is dependent on both the temperature and the shear rate on the polymer melt during the processing. Since industrial processes are typically run on larger extruders than the micro extruder used in these examples it can be expected that the reaction rate in an industrial process will be higher than in the examples

below. Processing times in industrial processes can vary depending on type, where compounding is usually very short (<1 min), extrusion processes may vary from 1 to 5 minutes (e.g. profile extrusion) to >10 minutes for foam extrusion. Therefore, the processing time in the micro-compounding experiments was chosen so that the presence (or absence) of the effect of the additives on the PET and PA12 could be verified.

*Melt strength analysis with parallel plate rheometer*

Samples were collected from the micro extruder after processing and further analysed by rheometry. Rheometry measurements were performed on an ARES G2 plate-plate rheometer from TA Instruments (New Castle, DE, USA). A fixture with Φ=25 mm plates was used running with a gap of 1 mm. Operating temperature was 260 °C for PET and the frequency was ramped down from 600 rad/s to 0.3 rad/s with a strain of 5%.

*Polymer compounds*

**Table 1 -** PET-compounds

| Example | PBO | PMDA | PETA |
|---|---|---|---|
| Comparative example 1 | - | - | - |
| Comparative example 2 | 0.5% | - | - |
| Comparative example 3 | - | 0.6% | - |
| Comparative example 4 | 0.3% | 0.3% | - |
| Example 1 | 0.5% | - | 1% |

**Table 2** - PA12-compounds

| Example | PBO | PyBOx | PETA |
|---|---|---|---|
| Comparative example 5 | - | - | - |
| Comparative example 6 | - | - | 0.6% |
| Comparative example 7 | 0.8% | - | - |
| Example 2 | 0.6% | - | 0.6% |

**Table 3 -** PA6-compounds

| Example | PBO | PyBOx | PETA |
|---|---|---|---|
| Comparative example 8 | - | - | - |
| Comparative example 9 | 0.4% | - | - |
| Comparative example 10 | 0.8% | . | - |
| Comparative example 11 | - | 0.4% | - |
| Comparative example 12 | - | - | 0.6% |
| Comparative example 13 | - | - | 1.2% |
| Example 3 | 0.4% | - | 0.6% |
| Example 4 | 0.8% | - | 0.6% |

## Results

The pressure, which was measured in the micro compounder, is directly proportional to the viscosity of the polymer melt. Since it is well known that chemical reactions such as chain-extension, long-chain branching and cross-linking increase the melt viscosity, the measured pressure has been employed as a semi-quantitative measure of the reaction of the PETA, PyBOx, PMDA and the PBO with the polymers.

**Table 4 -** Pressure as function of residence time in extruder for various combinations of PET and the additives PBO, PMDA and PETA

| Additive | Performance | Max pressure | Relative pressure at 20 min |
|---|---|---|---|
| Comparative example 1 | - | 7 bar | 29% (2 bar) |
| Comparative example 2 | - | 8 bar | 50% (4 bar) |
| Comparative example 3 | + | 42 bar | 33% (14 bar) |
| Comparative example 4 | ++ | 43 bar | 51 % (22 bar) |
| Example 1 | +++ | 48 bar | 83% (41 bar) |

Whereas system comprising PMDA or combinations of PMDA and PBO also are effective in reacting with PET to increase the melt strength (measured as increased pressured in the extruder), these systems are prone to quite rapidly cause degradation. For longer residence time, such as the ones typically used in e.g. foaming application, the final melt strength is thus significantly lower (cf. Fig. 1 and Table 4). However, as can be seen from Fig. 1 and Table 4, systems comprising combinations of PETA and PBO, may provide increased melt strength also for longer residence times as the melt strength declines far less rapidly. As can be seen in Fig. 1 for the PMDA, PMDA+PBO and PBO formulations, the pressure reaches its maximum value in < 10 minutes and after that, it decreases with increasing time. For the PETA+PBO, on the other hand, the maximum pressure is obtained after > 10 minutes. Also, for the PETA+PBO formulation the pressure at the end of the experiment is significantly higher than for the comparative examples

In Fig. 2 the complex viscosity as function of frequency as measured by parallel plate rheometry for comparative examples 1 to 4 and example 1, respectively, are depicted. At high frequencies > 100 rad/s (i.e. at high shear rate) the differences between the different formulations is relatively small, whereas at low frequencies <1rad/s (i.e. at low shear rate) the complex viscosity of the PETA-PBO formulation is approximately at least one order of magnitude higher than the comparative examples. Further, the cross-over point, which was determined from the frequency sweep analysis, was significantly lower for Example 1 as compared to the Comparative Examples 1-4. Determination of cross-over point is a method used to evaluate the melt strength (ref J. Frankland, Plastics Technology Online 2013-05-28). Thus, the melt strength of the PETA-PBO formulation is superior compared to that of the comparative examples. Further, this confirms that pressure in the extruder may be used as a semi-quantitative measure of the melt strength, as the shear rate in the current experiments is about 6 rad/s in the extruder.

**Table 5** - Comparison of various phthalic anhydrides in PET combination with PBO

| Additive | Max Pressure | Relative pressure at 20min |
|---|---|---|
| PBO | 8 bar | 4 bar (50%) |
| PETA/PBO | 48 bar | 41 bar (83%) |
| PA/PBO | 6 bar | 5 bar (83%) |
| MEPA/PBO | 8 bar | 7 bar (88%) |

**Table 6** - Relative pressure increase after 2 minutes in micro-extruder during melt mixing of polyamide 6 and additives

| Example | PBO | PyBOx | PETA | Relative pressure increase |
|---|---|---|---|---|
| CE 8 | - | - | - | 0% |
| CE 9 | 0.4% | - | - | 31% |
| CE 10 | 0.8% | - | - | 54% |
| CE 11 | - | 0.4% | - | 99% |
| CE 12 | - | - | 0.6% | 75% |
| CE 13 | - | - | 1.2% | 45% |
| Ex 3 | 0.4% | - | 0.6% | 173% |
| Ex 4 | 0.8% | - | 0.6% | 236% |

As can be seen from Table 5, neither phtalic anhydride nor MEPA provides the same effect as PETA. Firstly, as recognised in the art, phtalic anhydride is inferior to PMDA improving the melt strength of PET. PMDA comprises two

phtalic anhydride residues, which both can react with PET chain-extend and cross-link the polymer. Secondly, also the related compound MEPA is inferior to PETA in improving the melt strength of PET, though MEPA, similar to PETA, apart from the phtalic anhydride residue also comprises a second reactive moiety, i.e. a methylethynyl residue. These unique properties of PETA in combination with PBO are highly unexpected.

As can be seen from Fig. 3, the maximum pressure obtained from PBO or PETA with PA12 is lower than that of the combined use of PETA and PBO. Increasing the amount of PBO or PETA if used separate, will not result in increased maximum pressure.

As can be seen in in Table 6, the relative pressure increase obtained from PBO, PyBOx, and PETA (i.e. 0.8% PBO, 0.4% PyBox, and 0.6% PETA) formulations is lower than that of the PETA+PBO formulations (e.g. 0.4% PBO + 0.6%PETA). Increasing the amount of PBO or PETA if used separate, will not result in increased maximum pressure, while an increase of the amount of PyBOx will result in ca 50% higher relative pressure increase.

## Claims

1. A process for increasing the melt strength of a thermoplastic polymer, the thermoplastic polymer being a polyester, a polyamide, or a polyurethane, wherein the process comprises the steps of:

   - adding 5-(3-phenylprop-2-ynoyl)isobenzofuran-1,3-dione (**P**henyl**E**thynyl**T**rimellitic**A**nhydride; PETA) and a bisoxazoline, or a bis-5,6-dihydro-4*H*-1,3-oxazine, to the thermoplastic polymer; and
   - mixing and heating the mixture to melt the thermoplastic polymer and have the thermoplastic polymer, PETA, and the bisoxazoline, or the bis-5,6-dihydro-4H-1,3-oxazine, reacting, thereby increasing the melt strength of the thermoplastic polymer.

2. The process according to claim 1, wherein the bisoxazoline is a compound according to formula I, and wherein the bis-5,6-dihydro-4*H*-1,3-oxazine is a compound according to formula II

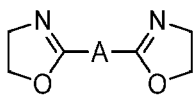 (I) 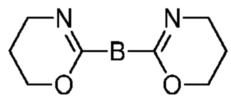 (II)

   wherein "A" is a bond, *meta*-phenylene, or *para*-phenylene; and
   wherein "B" is a bond, *meta*-phenylene, or *para*-phenylene.

3. The process according to claim 2, wherein the process comprises adding a compound according to formula I to the thermoplastic polymer, the compound according to formula I being selected from the group consisting of 1,3-bis(4,5-dihydrooxazol-2-yl)benzene (1,3-PBO), 1,4-bis(4,5-dihydrooxazol-2-yl)benzene (1,4-PBO), and 2,2'-bis-(2-oxazoline); preferably the compound according to formula I being 1,3-bis(4,5-dihydrooxazol-2-yl)benzene (1,3-PBO).

4. The process according to any of the claims 1 to 3, wherein the thermoplastic polymer is a polyester, preferably the polyester being selected from the group consisting of polyethylene terephthalate (PET), polybutylene terephthalate (PBT), polytrimethylene terephthalate (PTT), polyglycolic acid (PGA), polylactic acid (PLA), polycaprolactone (PCL), and polyethylene naphthale (PEN).

5. The process according to claim 4, wherein the thermoplastic polymer is polyethylene terephthalate (PET).

6. The process according to any of the claims 1 to 3, wherein the thermoplastic polymer is an aliphatic polyamide; preferably the aliphatic polyamide being selected from the group consisting of PA6, PA11, PA12, PA46, PA410, PA66, PA610, PA612, PA1010, PA1012, and PA1212.

7. The process according to claim 6, wherein the aliphatic polyamide is selected from the group consisting of PA6, PA12, and PA66.

8. The process according to any of the claims 1 to 7, wherein 0.5 to 2 wt.% PETA is added to the thermoplastic polymer.

9. The process according to any of the claims 1 to 8, wherein 0.1 to 1.5 wt.% of the bisoxazoline, or the bis-5,6-dihydro-4H-1,3-oxazine, is added to the thermoplastic polymer.

**10.** The process according to any of the claims 1 to 9, wherein the molar amount of PETA added is from 0.2 to 0.8, such as about 0.5, times the molar amount of hydroxyl end-groups or amino end-groups in the thermoplastic polymer.

**11.** The process according to any of the claims 1 to 10, wherein the thermoplastic polymer is a polyester, and wherein the molar amount of bisoxazoline, or bis-5,6-dihydro-4H-1,3-oxazine, added is calculated according to formula III:

$$A \times (B/2 + C/2) \quad (III)$$

wherein:

"A" is from 0.7 to 1.3, preferably 0.8 to 1.2, e.g. about 1;
"B" is the molar amount of carboxy end-groups in the polyester; and
"C" is the molar amount of PETA added;

or wherein the thermoplastic polymer is a polyamide, and the molar amount of bisoxazoline, or bis-5,6-dihydro-4H-1,3-oxazine, added is 0.3 to 0.7, such as 0.4 to 0.6, e.g. about 0.5, times the molar amount of carboxy end-groups in the polyamide.

**12.** The process according to any of the claims 1 to 11, wherein the thermoplastic polymer, PETA, and the bisoxazoline, or the bis-5,6-dihydro-4H-1,3-oxazine, are mixed and heated in an extruder; preferably the thermoplastic polymer is melted before PETA and the bisoxazoline, or the bis-5,6-dihydro-4H-1,3-oxazine, are added.

**13.** The process according to claim 11, wherein the residence time of the thermoplastic polymer in the extruder is between 10 and 30 minutes, preferably between 15 and 25 minutes.

**14.** The process according to any of the claims 1 to 13, wherein the process further comprises the step of foaming the obtained thermoplastic polymer having improved melt strength.

**15.** A polymer compound comprising a thermoplastic polymer, being a polyester, a polyamide, or a polyurethane, 5-(3-phenylprop-2-ynoyl)isobenzofuran-1,3-dione (**P**henyl**E**thynyl**T**rimellitic**A**nhydride; PETA), and a bisoxazoline, or a bis-5,6-dihydro-4H-1,3-oxazine.

Fig. 1

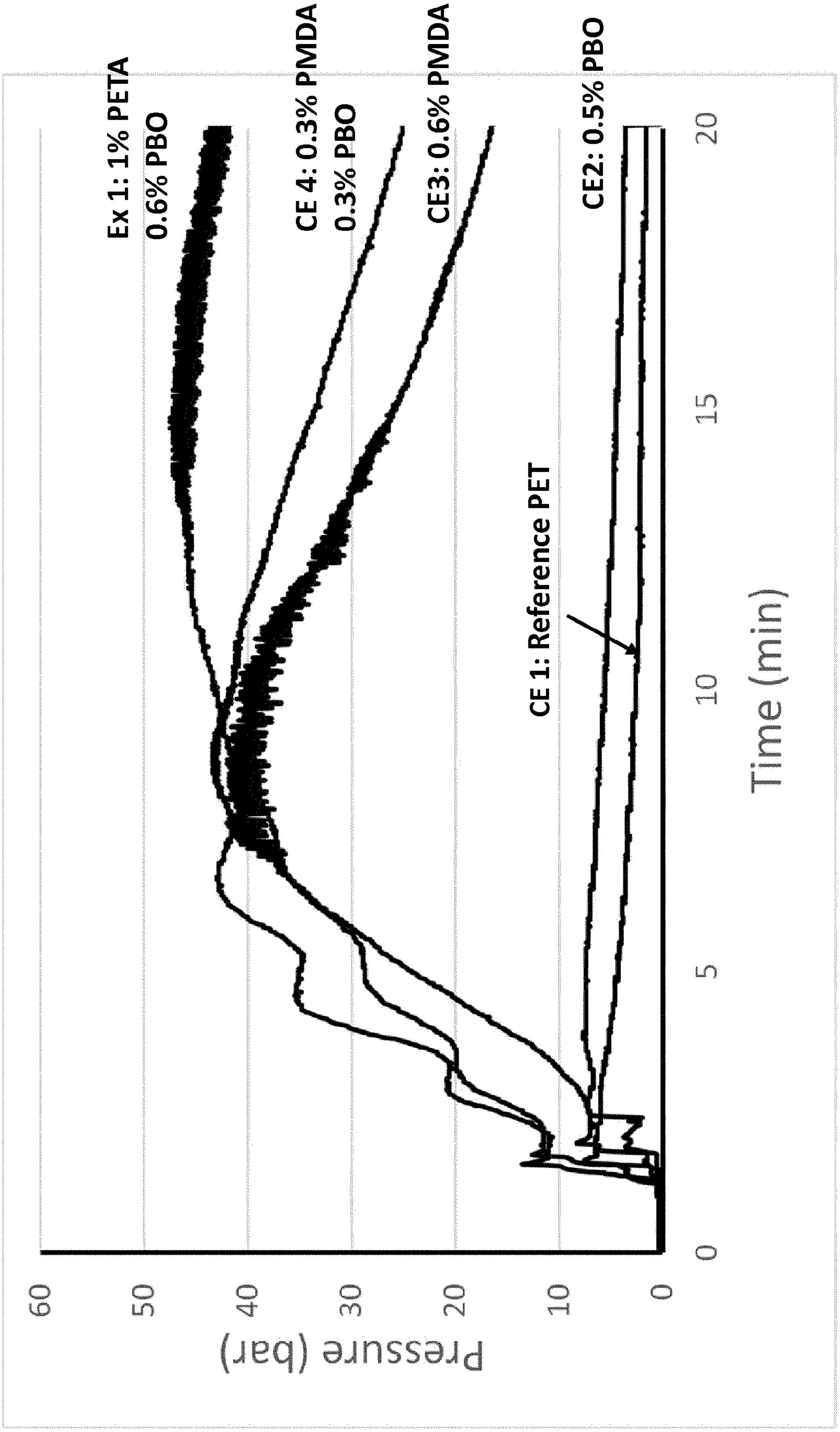
Ex 1: 1% PETA
0.6% PBO
CE 4: 0.3% PMDA
0.3% PBO
CE3: 0.6% PMDA
CE2: 0.5% PBO
CE 1: Reference PET
Pressure (bar)
0
10
20
30
40
50
60
Time (min)
0
5
10
15
20

Fig. 2

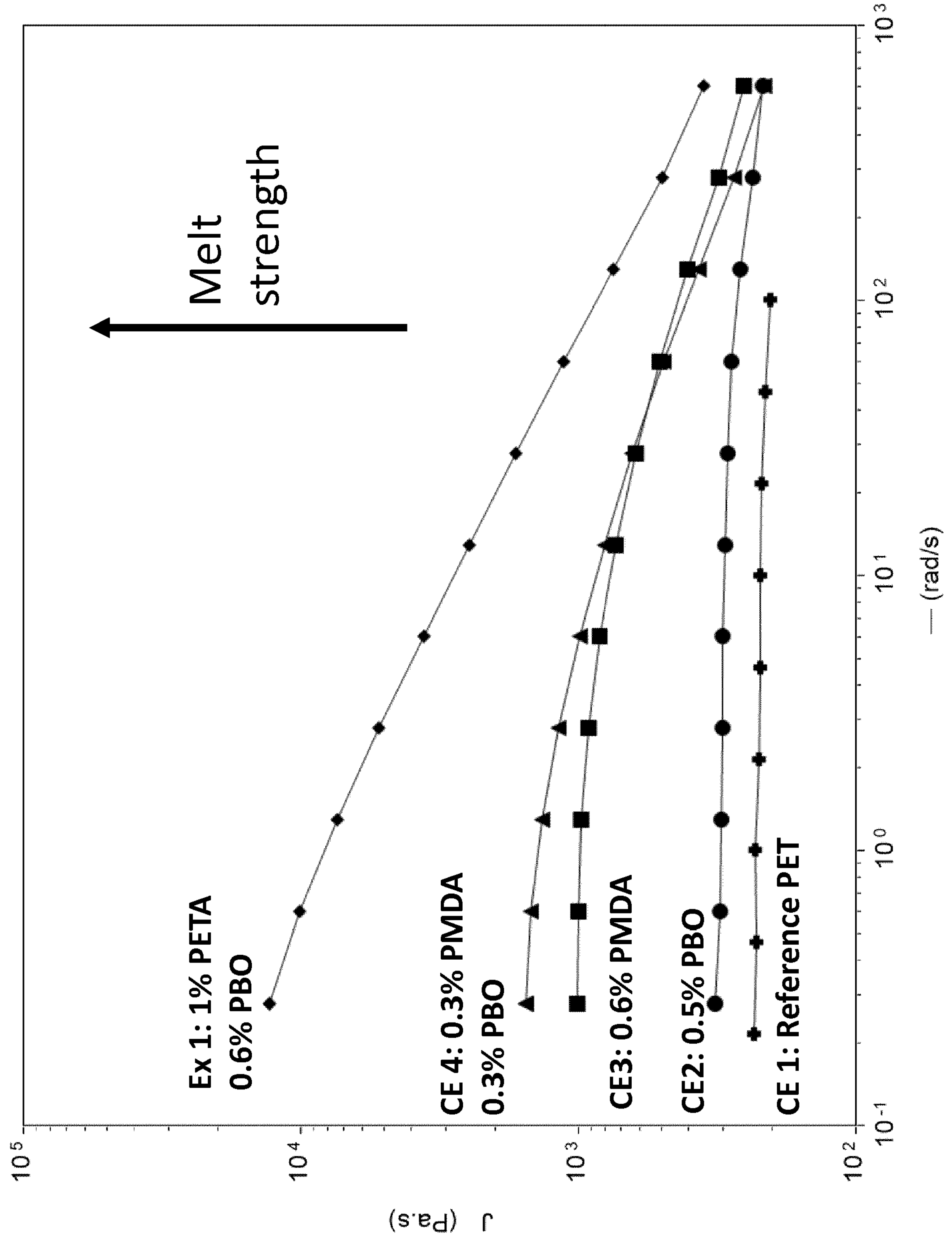
Melt strength
Ex 1: 1% PETA 0.6% PBO
CE 4: 0.3% PMDA 0.3% PBO
CE3: 0.6% PMDA
CE2: 0.5% PBO
CE 1: Reference PET
10⁵
10⁴
10³
10²
J (Pa.s)
10⁻¹
10⁰
10¹
10²
10³
— (rad/s)

Fig. 3

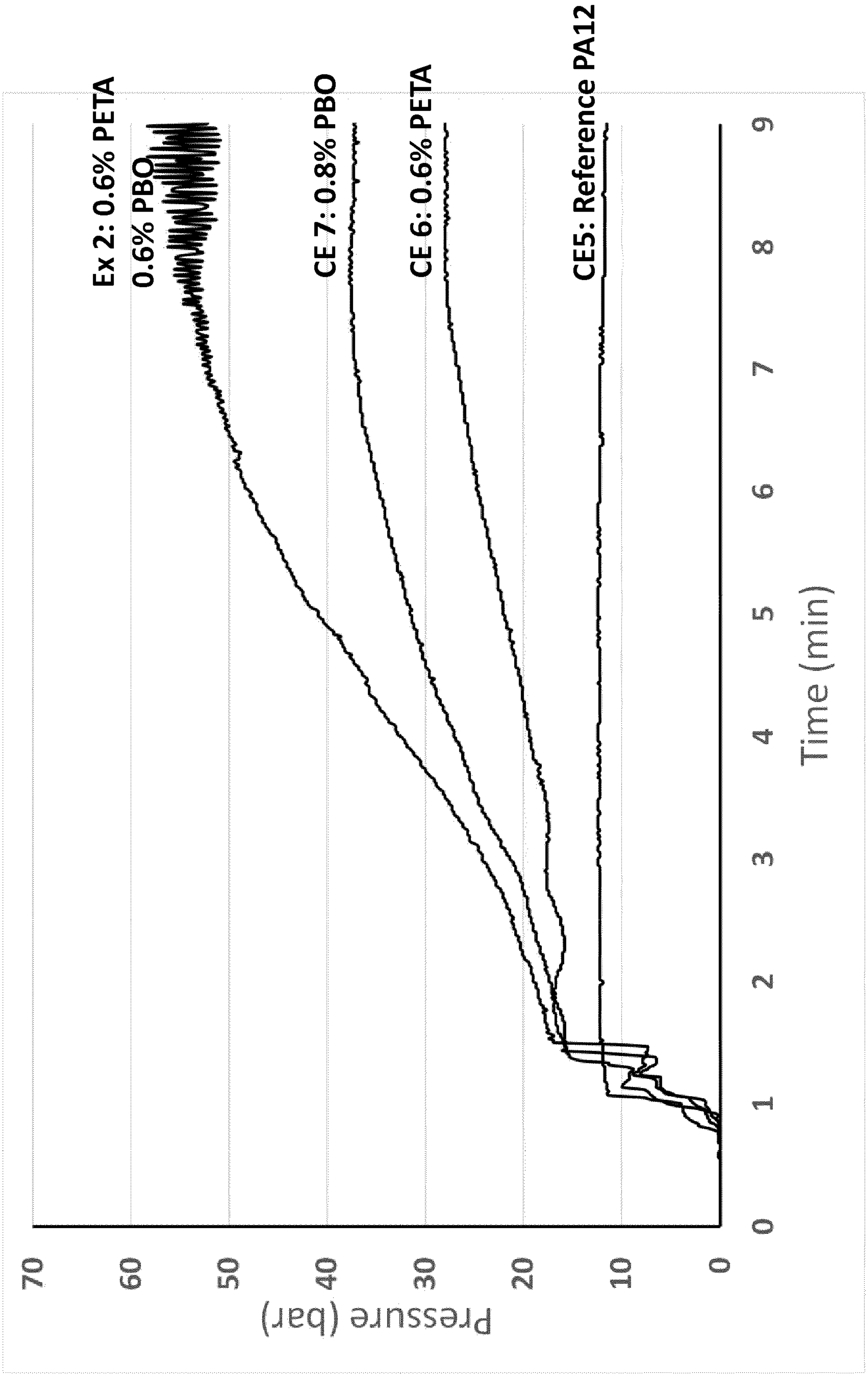
Ex 2: 0.6% PETA
0.6% PBO
CE 7: 0.8% PBO
CE 6: 0.6% PETA
CE5: Reference PA12
Pressure (bar)
0
10
20
30
40
50
60
70
Time (min)
0
1
2
3
4
5
6
7
8
9

Europäisches Patentamt
European Patent Office
Office européen des brevets

# EUROPEAN SEARCH REPORT

Application Number
EP 17 17 2839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br><br>Y | WO 2012/120148 A1 (NEXAM CHEMICAL AB [SE]; ROEME DANIEL [SE]; PERSSON DAVID [SE]; ROSENBE) 13 September 2012 (2012-09-13)<br>* claims; examples; tables 1-3,6-8 *<br>----- | 15<br><br><br>1-14 | INV.<br>C08G63/91<br>C08K5/1539<br>C08G69/48<br>C08K5/353<br>C08K5/357 |
| X,D | EP 2 163 577 A1 (ARMACELL ENTERPRISE GMBH [DE]) 17 March 2010 (2010-03-17)<br>* abstract; figures 4,7; examples 5,8,9; table 2 *<br>----- | 15 | |
| Y | Lilli Manolis Sherman: "Additives: Multi-Purpose Modifiers Pump Up Properties of Virgin & Recycled Plastics : Plastics Technology",<br>Plastics Technology,<br>23 November 2015 (2015-11-23), XP055295139,<br>Retrieved from the Internet:<br>URL:http://www.ptonline.com/articles/additives-multi-purpose-modifiers-pump-up-properties-of-virgin-recycled-plastics<br>[retrieved on 2016-08-11]<br>*Nexamite A56*;<br>page 4, paragraph 7 - page 5, paragraph 3<br>----- | 1-14 | TECHNICAL FIELDS SEARCHED (IPC)<br>C08G<br>C08K |

The present search report has been drawn up for all claims

4

| Place of search | Date of completion of the search | Examiner |
|---|---|---|
| The Hague | 18 October 2017 | Mettler, Rolf-Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 17 17 2839

This annex lists the patent family members relating to the patent documents cited in the above-mentioned European search report. The members are as contained in the European Patent Office EDP file on
The European Patent Office is in no way liable for these particulars which are merely given for the purpose of information.

18-10-2017

| Patent document cited in search report | Publication date | Patent family member(s) | Publication date |
|---|---|---|---|
| WO 2012120148 A1 | 13-09-2012 | CN 103429636 A | 04-12-2013 |
| | | EP 2683756 A1 | 15-01-2014 |
| | | JP 2014507543 A | 27-03-2014 |
| | | US 2014018460 A1 | 16-01-2014 |
| | | WO 2012120148 A1 | 13-09-2012 |
| EP 2163577 A1 | 17-03-2010 | DK 2163577 T3 | 15-10-2012 |
| | | EP 2163577 A1 | 17-03-2010 |
| | | ES 2393223 T3 | 19-12-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9833837 A
- EP 0639612 A
- EP 2163577 A
- WO 2012120148 A
- US 5597525 A
- WO 2011128431 A
- WO 2012052550 A


### Non-patent literature cited in the description


- **NÉRY et al.** *Macromol. Chem. Phys.,* 2003, vol. 204, 1755
- **J. FRANKLAND.** *Plastics Technology,* 28 May 2013